# EUROPEAN PATENT APPLICATION

(11) **EP 0 920 011 A1**
(43) Date of publication of application: **02.06.1999**
(21) Application number: 96926590.9
(22) Date of filing: 08.08.1996
(51) Int. Cl.: G11B 23/03

(54) **MAGNETIC DISK CARTRIDGE**

(71) Applicant: FUJI PHOTO FILM CO., LTD., Kanagawa 250-01 (JP); IOMEGA CORPORATION, Roy, Utah 84067 (US)
(72) Inventor: OISHI, Kengo, Odawara-shi, Kanagawa-ken 250 (JP)
(74) Representative: Grünecker, Kinkeldey, Stockmair & Schwanhäusser Anwaltssozietät
(86) International application number: JP9602235
(87) International publication number: WO9807151

(57) **Abstract**

A magnetic disk cartridge has a magnetic head access opening formed in one side surface of a flat cassette shell having a top surface, a bottom surface and side surfaces. A shutter member provided to be slidable on the cassette shell for opening and closing the magnetic head access opening is constituted as a sectionally 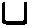 -shaped member formed by an upper wing, a shutter section and a lower wing that are interconnected and extend respectively along the top surface, one side surface and the bottom surface. The shutter member is formed by bending a sheet member from an initial flat state, and the window is formed in the flat sheet member before bending to have its upper and lower edges set back from upper and lower bending lines in the direction of the upper wing and the lower wing by at least a distance equal to three times the sheet member thickness. The resulting structure eliminates the problem of powder being produced owing to abrasion of the cassette shell because of deformation of the shutter window during the bending of the shutter member and ensures smooth sliding of the shutter member at all times.

## Description

### TECHNICAL FIELD

The present invention relates to a magnetic disk cartridge, more particularly to an improved structure of a shutter for opening and closing a magnetic head access opening in a magnetic disk cartridge having a rotatable magnetic disk encased in a cassette shell.

### BACKGROUND ART

A magnetic disk cartridge comprises a magnetic disk for magnetically recording analog and/or digital signals rotatably encased in a thin cassette shell. The cassette shell is formed in the shape of a flat prism (substantially a hexahedron) with a top surface slightly larger than the magnetic disk, a bottom surface having an opening through which a center core supporting the center of the magnetic disk is exposed and narrow side surfaces extending between the outer peripheral edges of the top and bottom surfaces. The magnetic disk cartridge is provided with a magnetic head access opening for insertion/withdrawal of magnetic heads used for magnetic recording and reproducing so as to enable the magnetic heads to be brought into contact with, or close to, the opposite surfaces of the magnetic disk from the exterior. The magnetic head access opening is equipped with a shutter member for preventing invasion of dust and the like when the magnetic disk cartridge is not in use.

The magnetic head access opening of the prior art magnetic disk cartridge is a slender opening of substantially rectangular shape formed in the top and bottom surfaces of the cassette shell to extend in the radial direction of the magnetic disk. The shutter member for opening/closing the magnetic head access opening is a piece of thin sheet metal of 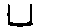 -shaped section which extends along both the top and bottom surfaces of the cassette shell and also over the side surface between them.

However, it is not absolutely necessary for the magnetic head access opening to be formed in the top and bottom surfaces of the cassette shell to extend in the radial direction of the magnetic disk. Specifically, it can be provided at any location so long as it enables the magnetic heads to be brought in contact with, or close to, the opposite surfaces of the magnetic disk over the full radius thereof from the exterior. The opening is preferably as small as possible so as to minimize invasion of dust into the cartridge. The ability to fabricate smaller magnetic heads has afforded greater freedom in the positioning and sizing of the magnetic head access opening and has even made it possible to realize the desired small magnetic head access opening by providing the opening only in a side surface rather than in the top and/or bottom surface. This can be achieved by forming a narrow side surface of the cassette shell with a magnetic head access opening of a size enabling access to the opposite surfaces of the magnetic disk from the exterior and inserting/withdrawing thin, arm-shaped pickups having tiny magnetic heads attached at their tips through this hole to conduct recording and reproduction while moving the pickups in the radial direction of the magnetic disk.

Such a magnetic disk cartridge having the magnetic head access opening formed in one side surface can accommodate a high-density, high-capacity magnetic disk. Such a magnetic disk requires a high data transfer rate. Like the conventional hard disk, therefore, it is adapted to conduct recording and reproducing while being rotated at a high speed.

The shutter member for opening and closing this type of magnetic head access opening has, as interconnected, an upper wing, a lower wing and a shutter section extending along the top and bottom surfaces and one side surface of the cassette shell, respectively, and the shutter section is provided with a window for opening the magnetic head access opening. The shutter member is obtained by first punching a sheet material (sheet metal or the like) to form a sheet member of prescribed developed (flat) shape while simultaneously forming the shutter window, and then bending the sheet member into 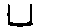 -shape.

During bending, it is difficult to make the bend lines coincide precisely with the edges (upper and lower extremities) of the shutter window. In addition, the bending along the edges of the window is liable to deform the edges. This is particularly a problem when the deformation causes the corner portions to shift inward because friction then occurs between the stiff sheet metal of the shutter member and the plastic material of the cassette shell during opening and closing of the shutter member. As a result, the corner portions of the shutter member may abrade the cassette shell. The powder produced by the abrasion during sliding of the shutter member in the opening and closing directions in this state is likely to find its way inside the cassette shell through the magnetic head access opening, stick to the magnetic disk, and then transfer and stick to the magnetic heads where it causes dropout and other problems that degrade the recording and reproducing performance.

The object of this invention is to overcome the aforesaid problems by providing a magnetic disk cartridge wherein deformation of the shutter member at the bent edge portions of the shutter window is prevented to enable opening and closing of the magnetic head access opening by sliding the shutter member along the cassette shell while maintaining an optimum state of abrasion-free contact therewith.

### DISCLOSURE OF INVENTION

The present invention provides a magnetic disk cartridge comprising a cassette shell formed as a flat prism with a top surface slightly larger than a magnetic disk encased in the cassette shell, a bottom surface of approximately the same shape as, and parallel to, the top surface, and narrow side surfaces extending between outer peripheral edges of the top and bottom surfaces, a magnetic head access opening formed in one side surface of the cassette shell for enabling magnetic reproducing and recording heads to be brought in contact with, or close to, opposite surfaces of the magnetic disk from the exterior, and a shutter member constituted as a sectionally 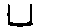 -shaped sheet member formed of an upper wing, a shutter section with a shutter window and a lower wing that are interconnected and extend respectively along said top, one side and bottom surfaces, wherein the shutter member is provided on the cassette shell to be slidable along said surfaces for enabling the shutter window of the shutter section to open and close the magnetic head access opening, the shutter member is formed by bending the sheet member from an initial flat state, and the window is formed in the flat sheet member before bending to have upper and lower edges set back from upper and lower bending lines in the direction of the upper wing and the lower wing by at least a distance equal to three times sheet member thickness.

Each bent portion of the shutter member preferably has a radius of curvature equal to or greater than the sheet member thickness.

Since the invention provides the magnetic head access opening of the magnetic disk cartridge in one side surface of the cassette shell, the magnetic head access opening can be made small to minimize invasion of dust and the like into the interior of the cartridge. In addition, the shutter member for opening and closing the magnetic head access opening, which is constituted as a sectionally 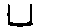 -shaped sheet member formed by interconnecting an upper wing, a shutter section and a lower wing that extend respectively along the top, one side and bottom surfaces of the cassette shell, is fabricated from a flat sheet member formed with a window at the portion destined to become the shutter section by bending the flat sheet member along bending lines in such manner that each of the upper and lower edges of the shutter window is defined to fall farther toward the outer edge of the sheet member than the corresponding bending line by a distance which is at least three times the magnitude of the thickness of the sheet member. As a result, the tolerance to dimensional error in the bending operation is increased, deformation of the shutter window is precluded, and the problem of powder being produced owing to abrasion of the cassette shell by projecting corners of the shutter member is eliminated so that occurrence of dropout and other problems are prevented and smooth sliding of the shutter member is ensured at all times.

### BRIEF DESCRIPTION OF DRAWINGS

Figure 1 is a top perspective view of a magnetic disk cartridge which is an embodiment of the invention shown with its shutter member closed,
Figure 2 is a bottom perspective view of the magnetic disk cartridge of Figure 1 shown with its shutter member closed,
Figure 3 is a top perspective view of the magnetic disk cartridge of Figure 1 shown with its shutter member open,
Figure 4 is a plan view of a sheet member for forming a shutter member by bending,
Figure 5 is an enlarged sectional view of a bent portion of the shutter member.

### BEST MODE OF CARRYING OUT THE INVENTION

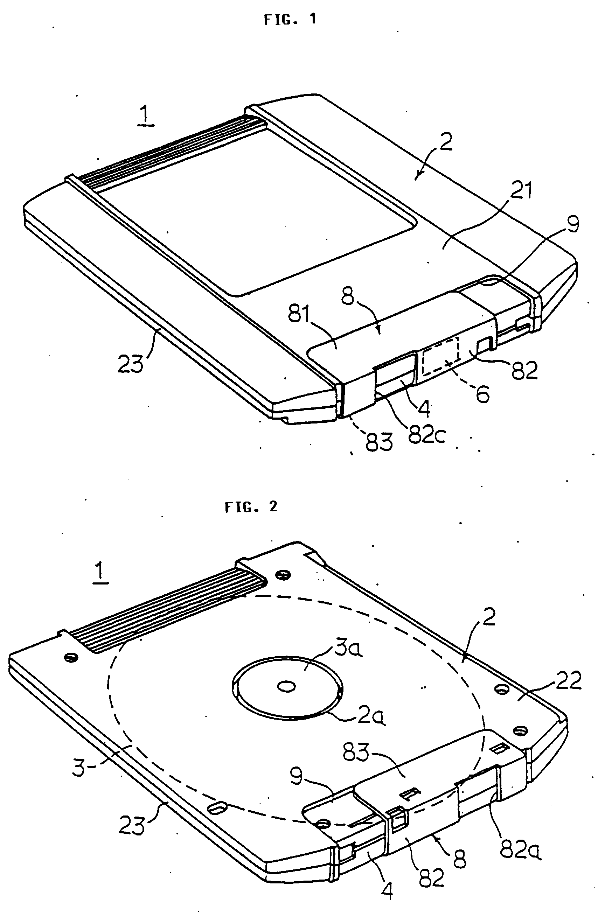

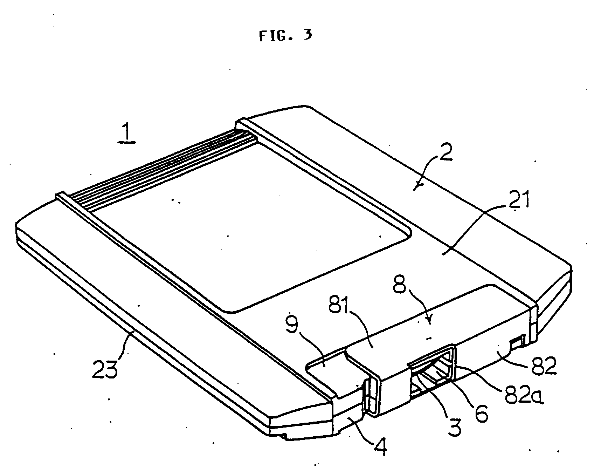

The magnetic disk cartridge of the present invention will hereinbelow be described with reference to the accompanying drawings. Figures 1 to 3 show a magnetic disk cartridge which is an embodiment of the invention. The magnetic disk cartridge is shown in perspective view from the top with its shutter member closed in Figure 1, from the bottom with its shutter member closed in Figure 2, and from the top with its shutter member open in Figure 3.

The magnetic disk cartridge 1 of this embodiment comprises a cassette shell 2 encasing a magnetic disk 3 so as to be freely rotatable therein. The cassette shell 2 is formed of a pair of top and bottom cassette shell halves made of molded plastic. The cassette shell 2 is formed substantially as a flat hexahedron having an approximately square top surface 21 slightly larger than a magnetic disk 3 encased therein, a bottom surface 22 of substantially the same shape as the top surface 21 and lying parallel thereto, and narrow side surfaces 23 extending between the outer peripheral edges of the top surface 21 and the bottom surface 22.

The center portion of the magnetic disk 3 (recording medium) is fixed to a rotating member 3a. The rotating member 3a faces into a circular opening 2a in the bottom surface 22 of the cassette shell 2 (see Figure 2). The rotating member 3a is adapted to be engaged by a spindle for rapidly rotating the magnetic disk 3.

A magnetic head access opening 6 enabling magnetic recording and reproducing heads to be brought in contact with, or close to, the opposite surfaces of the magnetic disk 3 from the exterior is formed in one side surface 4 among the four side surfaces 23 of the cassette shell 2.

A slidable shutter member 8 for opening and closing the magnetic head access opening 6 is provided on the cassette shell 2. The shutter member 8 is constituted as a sectionally 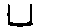 -shaped metal sheet member comprising, as interconnected, an upper wing 81 extending along the top surface 21, a shutter section 82 extending along the one side surface 4 and a lower wing 83 extending along the bottom surface 22. The shutter member 8 moves along these surfaces. It is further provided with a shutter window 82a. It can therefore open and close the magnetic head access opening 6 depending whether the magnetic disk cartridge 1 is in storage or operation.

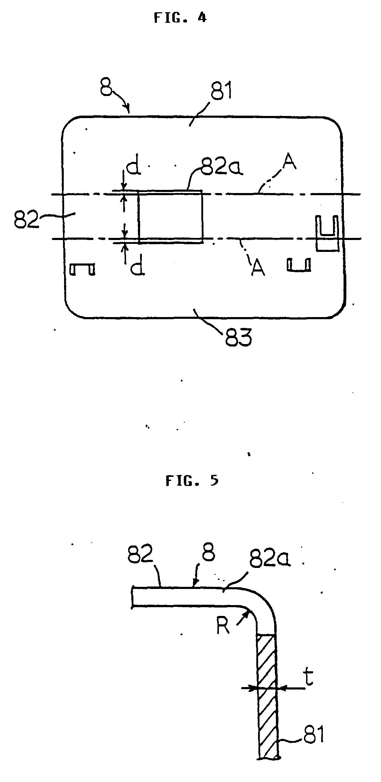

The shutter member 8 is formed by bending a flat piece of sheet material (a sheet member). As shown in Figure 4, the upper and lower edges of the shutter window 82a in the flat sheet member before bending are formed to be set back from bending lines A in the direction of the upper wing 81 and the lower wing 83. The setback distance d is made at least three times the thickness t (of 0.3 mm, for example) of the sheet member (d ≥ 3t).

Further, as shown in Figure 5, the radius of curvature R of each bent portion (on the inner surface side) of the shutter member 8 is made equal to or greater than the sheet member thickness t (R ≥ t).

On the other hand, portions of the top surface 21, the side surface 4 and the bottom surface 22 of the cassette shell 2 adjacent to the magnetic head access opening 6 are formed with a shallow recess 9 for retaining and guiding the upper wing 81, the shutter section 82 and the lower wing 83 of the shutter member 8. The upper wing 81, shutter section 82 and lower wing 83 of the shutter member 8 are received in and guided by the recess 9 to be slidable laterally along the surfaces of the cassette shell 2.

The magnetic disk cartridge 1 of this embodiment is used in the same manner as the prior-art magnetic disk cartridge. Specifically, it is loaded into the magnetic recording and reproducing device (hereinafter called simply "device") in the state shown in Figure 1, i.e. with the magnetic head access opening 6 closed by the shutter member 8. At this time, an operating member provided in the device responds to the loading operation by sliding the shutter member 8 to the open position shown in Figure 3. Then, when the operator performs a prescribed operation for removing the magnetic disk cartridge from the device, for instance, when the operator presses a prescribed operating button of the device, the operating member of the device responds by closing the shutter member 8 to the position shown in Figure 1.

As explained in the foregoing, each of the upper and lower edges of the shutter window 82a is defined to fall farther toward the outer edge of the sheet member (in the direction of the upper wing 81 or the lower wing 83) than the corresponding bending line A by a distance d which is at least three times the magnitude of the thickness t of the sheet member. Since the shutter window 82a is therefore defined to extend from within the region of the upper wing 81 to within the region of the lower wing 83, the accuracy to which the positioning of the bending lines is required to be controlled during the bending operation for defining the shutter section 82 is lower than in the past. In addition, the deformation that is liable to occur at the bent portions when the edges of the shutter window 82a coincide with the bending lines A is prevented. Since the inner surfaces of the shutter member 8 are therefore formed to high flatness, abrasion of the surfaces of the cassette shell 2 by local contact is prevented and smooth sliding of the shutter member 8 during opening and closing is ensured.

Since various types of device side mechanisms are available for conducting the opening and closing operations of the shutter member 8 and such a mechanism can easily be constituted as in conventional devices, a detailed explanation of such a mechanism will not be given here. To facilitate the opening and closing operations of the shutter member 8, particularly that in the closing direction, the cassette shell 2 is preferably provided with biasing means (e.g., a spring) for urging the shutter member 8 in the closing direction. Since such a biasing means also serves to retain the shutter member 8 in the closed position at all times when the cartridge is not in use, its provision is also preferable from the viewpoint of preventing invasion of dust and the like.

## Claims

1. A magnetic disk cartridge comprising
a magnetic disk,
a cassette shell encasing the magnetic disk to be rotatable therein and formed as a flat prism with a top surface slightly larger than the magnetic disk, a bottom surface of substantially the same shape as the top surface and lying parallel thereto and narrow side surfaces extending between outer peripheral edges of the top and bottom surfaces,
a magnetic head access opening formed in one side surface for enabling magnetic recording and reproducing heads to be brought in contact with, or close to, opposite surfaces of the magnetic disk from the exterior, and
a shutter member constituted as a sectionally 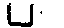 -shaped sheet member formed by interconnecting an upper wing, a shutter section with a shutter window and a lower wing that extend respectively along said top, one side and bottom surfaces, wherein the shutter member is provided on the cassette shell to be slidable along said surfaces for enabling the shutter window of the shutter section to open and close the magnetic head access opening, the shutter member is formed by bending the sheet member from an initial flat state, and the window is formed in the flat sheet member before bending to have upper and lower edges set back from upper and lower bending lines in the direction of the upper wing and the lower wing by at least a distance equal to three times sheet member thickness.

2. A magnetic disk cartridge as defined in claim 1, wherein bent portions of the shutter member formed by the bending each has a radius of curvature equal to or greater than the sheet member thickness.
